# EUROPÄISCHE PATENTANMELDUNG

(11) **EP 0 996 085 A1**
(43) Veröffentlichungstag der Anmeldung: **26.04.2000**
(21) Anmeldenummer: 98119842.7
(22) Anmeldetag: 20.10.1998
(51) Int. Cl.: G06K 19/077

(54) **Behältnis zur geschützten Aufnahme eines Transponders**

(71) Anmelder: A. & J. Stöckli AG, 8754 Nestal (CH)
(72) Erfinder: Frey, Reto, CH-8762 Schwanden (CH); Hauser, Balz, CH-8753 Mollis (CH)
(74) Vertreter: Blum, Rudolf Emil Ernst

(57) **Zusammenfassung**

Ein erster Behältnisteil (1) weist eine Platzierungsnase (3) auf, mittels welcher er in einem Spritzgusswerkzeug unverschiebbar gehalten werden kann. Dieser erste Behältnisteil (1) weist eine Vertiefung (4) zur Aufnahme eines ebenflächigen Transponders (11, 12, 13, 14) auf. Das erste Behältnisteil (1) weist weiter Schnappverschlussabschnitte (6) auf. Ein zweiter Behältnisteil (2) weist Führungsvertiefungen (10) zur Arretierung des in den ersten Behältnisteil (1) eingelegten Transponders (11, 12, 13, 14) auf. Der zweite Behältnisteil (2) weist ebenfalls Schnappverschlussabschnitte (8) auf, so dass die zwei Behältnisteile (1, 2) mit dem dazwischen angeordneten Transponder (11, 12, 13, 14) ineinander eingeschnappt werden können. Durch die Platzierungsnase (3) lässt sich das Behältnis (1, 2) in einem Spritzgusswerkzeug zur Herstellung eines das Behältnis (1, 2) mit dem Transponder (11, 12, 13, 14) enthaltenden Behälters genau und unverschiebbar platzieren. Während dem Spritzgiessen und im Fertigprodukt bleibt der Transponder (11, 12, 13, 14) vollständig geschützt.

## Beschreibung

Die vorliegende Erfindung betrifft ein gusstechnisch verarbeitbares, aus Kunststoff bestehendes Behältnis zur geschützten Aufnahme eines Transponders, der einen ebenflächigen Träger mit einem umhüllten Chip und eine entlang dem Träger verlaufende Rahmenantenne aufweist. Sie betrifft auch einen Behälter mit einem solchen Behältnis.

Ein Transponder ist eine Empfangs-Sendevorrichtung, die nach dem Abfrage-Antwort-System arbeitet. Ein von einem Transponder empfangenes codiertes Abfragesignal wird entschlüsselt und nach der Kennung und sonstigen Informationen des Abfragenden ausgewertet. Daraufhin wird automatisch ein codiertes, selektiv für den Abfragenden bestimmtes Antwortsignal mit der gewünschten Information ausgesendet, das beim Abfragenden ebenfalls automatisch entschlüsselt und ausgewertet wird.

Solche Transponder bestehen also aus einem Chip, der auf einem ebenflächigen Träger, z.B. in Form eines feinen Siebes, angeordnet ist, welcher Träger auch die Empfangs-/Sendeantenne trägt. In der Fachwelt werden solche Transponder auch als Tag bezeichnet. Der Tag wird üblicherweise auf den damit auszurüstenden Gegenstand aufgeklebt oder, falls der Gegenstand aus Kunststoff ist, z.B. in eine Spritzgussform eingelegt und dann umspritzt. Beispiele von Gegenständen sind Behälter oder Körbe, in denen Waren, z.B. Esswaren von einem Grossverteiler zu Verkaufsfilialen transportiert werden.

Aufgeklebte Transponder in Form eines Tags können beschädigt werden. Im Fall von Kunststoffbehältern, die in einer Form spritzgegossen werden, können die Transponder durch das Spritzgiessen verletzt werden und können auch verschoben werden, so dass sie im Gebrauch wirkungslos sind.

Hier will die Erfindung Abhilfe schaffen. Die Erfindung, wie sie in den Ansprüchen gekennzeichnet ist, löst die Aufgabe, ein aus Kunststoff bestehendes Behältnis zur geschützten Aufnahme eines Transponders, ein solches Behältnis mit eingelegtem Transponder und einen Behälter mit einem solchen Behältnis zu schaffen, bei welchen der Transponder beim Spritzgiessen und im Gebrauch nicht verletzt werden kann.

Die durch die Erfindung erreichten Vorteile sind im wesentlichen darin zu sehen, dass der Transponder von Beginn vollkommen umschlossen und geschützt ist, und auch während einem Spritzgiessen nicht verschoben werden kann. Der Transponder ist im Behälter geschützt eingegossen.

Im folgenden wird die Erfindung anhand von lediglich einen Ausführungsweg darstellenden Zeichnungen näher erläutert.
Figur 1 zeigt einen Schnitt durch einen ersten Behältnisteil mit einer Platzierungsnase, welcher Behältnisteil zur Aufnahme eines Transponders und eines zweiten Behältnisteils ausgebildet ist;
Figur 2 zeigt einen Schnitt durch einen Randbereich eines aus zwei durch einen Schnappverschluss miteinander verbundenen Behältnisteilen bestehenden Behältnisses;
Figur 3 zeigt eine Ansicht der Innenseite eines zweiten Behältnisteiles;
Figur 4 ist eine schaubildliche Darstellung eines zweiten Behältnisteiles;
Figur 5 ist eine schaubildliche Darstellung eines ersten Behältnisteiles, der mit dem zweiten Behältnisteil ausgerichtet angeordnet dargestellt ist;
Figur 6 zeigt eine Aufsicht auf einen Transponder;
Figur 7 ist eine schaubildliche Darstellung eines nach der Erfindung ausgebildeten Behältnisses, von der Seite der Platzierungsnase her gesehen;
Figur 8 ist eine schaubildliche Darstellung entsprechend derjenigen nach Figur 7, von der entgegengesetzten Seite des Behältnisses her gesehen;
Figur 9 zeigt schematisch das Einsetzen des Behältnisses in eine Spritzgussform; und
Figur 10 ist eine schaubildliche Darstellung eines Eckbereiches eines Behälters mit einem Behältnis, in welchem ein Transponder eingesetzt ist.

Das Behältnis besteht aus einem ersten Behältnisteil 1 aus Kunststoff und einem zweiten Behältnisteil 2 aus Kunststoff.

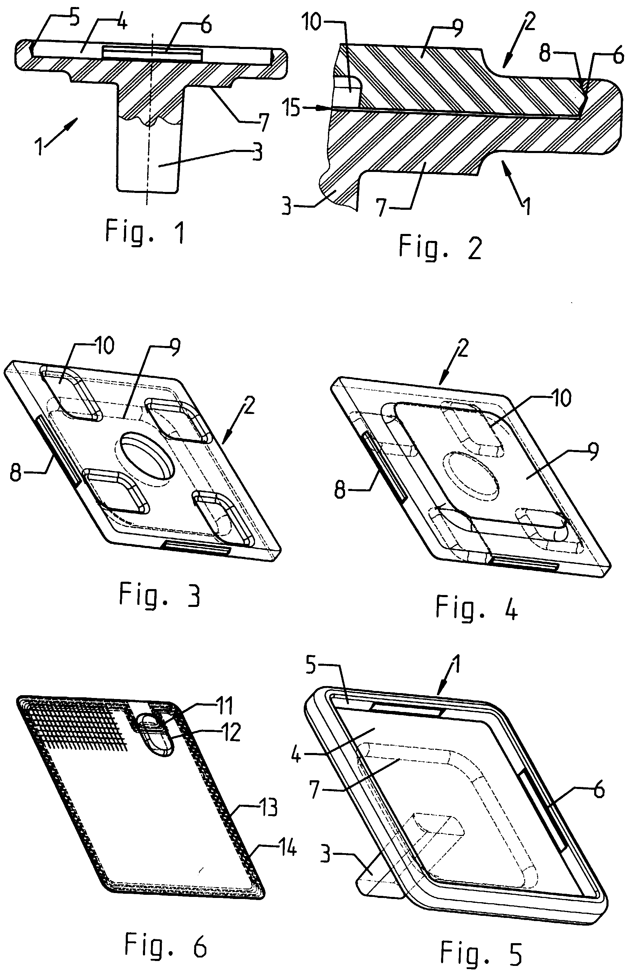

Der im Schnitt in Figur 1 gezeigte erste Behältnisteil 1 weist eine abstehende Platzierungsnase 3 auf. In diesem ersten Behältnisteil 1 ist eine Vertiefung 4 ausgebildet, die von Seitenwänden 5 umgeben ist. Der Körper des ersten Behältnisteils 1 weist bei der gezeigten Ausführung eine quadratische Grundrissform auf, so dass die Seitenwände 5 geradlinig verlaufen.

In jeder Seitenwand 5 des ersten Behältnisteiles 1 ist ein Schnappverschlussabschnitt in Form einer Innenrille 6 in der Seitenwand 5 ausgebildet. Weiter weist der erste Behältnisteil 1 bei seiner die Platzierungsnase 3 aufweisenden Seite eine Erhebung 7 auf.

Der zweite, plattenförmige Behältnisteil 2 weist an seinen vier Rändern Schnappverschlussabschnitte in Form von Aussenwülsten 8 auf. Weiter weist der zweite Behältnisteil 2 bei seiner Aussenseite ebenfalls eine Erhebung 9 auf.

Im zweiten Behältnisteil 2 mit quadratischer Grundrissform sind vier langgestreckte Führungsvertiefungen 10 ausgebildet, die in einem Winkelabstand von 90° angeordnet sind.

Figur 6 zeigt eine Aufsicht auf einen in das aus den Teilen 1 und 2 bestehende Behältnis einzulegenden Transponder. Der Transponder weist einen Träger 13 in Form eines feinen Siebes auf. Auf dem Träger 13 ist der Chip 11 des Transponders angeordnet, welcher Chip 11 von einer Umhüllung 12 aus einem Kunststoff vollständig umschlossen ist. Der Chip 11 steht mit der Rahmenantenne 14 des Transponders in Verbindung.

Es ist ersichtlich, dass beim Auflegen des Transponders auf den zweiten Behältnisteil 2 nach Figur 3, wozu der Transponder von der in der Figur 6 gezeigten Stellung räumlich um 180° gedreht wird, die wulstförmige Umhüllung 12 in eine der Führungsvertiefungen 10 zu liegen kommt. Wie aus der Figur 3 hervorgeht, sind vier Stellungen des Transponders auf dem zweiten Behältnisteil 2 möglich. In jeder dieser Stellungen ist der Transponder durch die in eine jeweilige Führungsvertiefung 10 ragende Umhüllung geführt, d.h. der Transponder kann sich weder verschieben noch kann er (aufgrund der langgestreckten Form der Umhüllung 12 und der jeweiligen Führungsvertiefer) rotieren.

Zum Montieren wird der Transponder z.B. in der Stellung nach Figur 6 in die Vertiefung 4 im ersten Behältnisteil 1, siehe insbesondere Figur 5, eingelegt. Danach wird der zweite Behältnisteil 2 in der Stellung nach Figur 4 eingesetzt, wobei die Aussenwülste 8 des zweiten Behältnisteils 2 in die Innenrillen 6 des ersten Behältnisteils 1 hineinschnappen, so dass diese zwei Teile durch eine Schnappverbindung zusammengehalten sind.

Die Aussenwülste 8 und die Innenrillen 6 sind dabei derart angeordnet, siehe Figur 2, dass zwischen den einander zugekehrten Hauptflächen der zwei Behältnisteile 1, 2 ein Raum zur Aufnahme des Transponders besteht, der in der Figur 2 mit dem Pfeil 15 angedeutet ist.

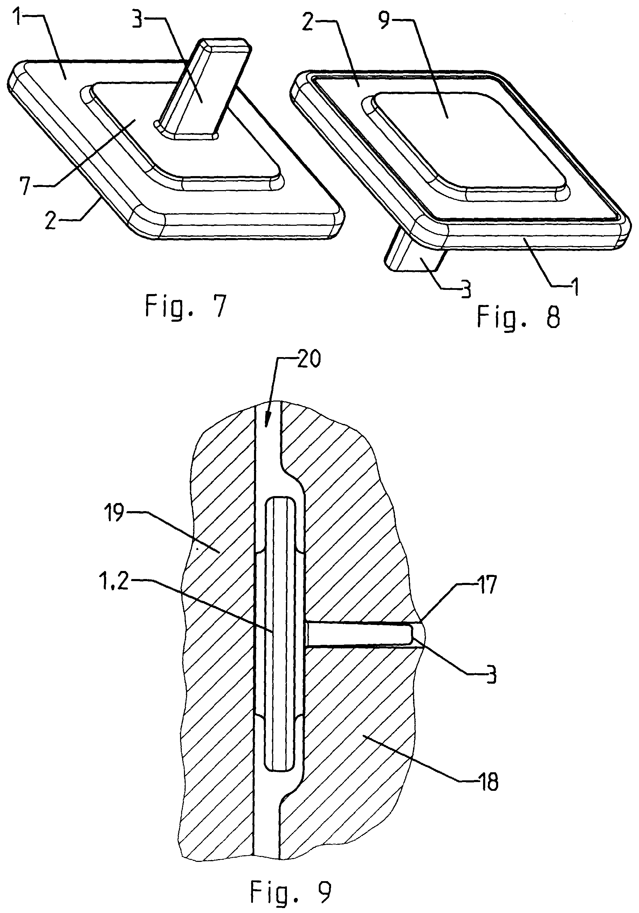

Damit liegt nun ein Behältnis mit einem eingeschlossenen Transponder vor, so wie in den Figuren 7 und 8 dargestellt ist.

Zum Spritzgiessen eines das Behältnis mit dem Transponder enthaltenden Behälters 16 für irgend eine Ware wird die Platzierungsnase 3 des Behältnisses, siehe Figur 9, durch eine Durchbrechung 17 in einer Wand 18 eines Spritzgussformteiles hindurchgesteckt. Danach wird ein weiterer Spritzgussformteil 19 in bekannter Weise in einem Abstand von der Wand 18, d.h. des gesamten dazugehörigen Spritzgussteiles angeordnet, so dass der Behälter 16 entsprechend spritzgegossen werden kann. Aufgrund der Platzierungsnase 3 ist das Behältnis 1, 2 im Spritzgusswerkzeug nicht nur genau platziert, sondern kann durch den einströmenden schmelzflüssigen Kunststoff nicht verschoben oder verdreht werden. Der schmelzflüssige Kunststoff, der zum Herstellen eines gesamten Behältnisses 1, 2 in die Spritzgussform eingebracht wird, fliesst unter anderem in den Spalt 20 und verschmilzt mit dem dort eingesetzten Behältnis 1, 2, um eine stoffschlüssige Verbindung zwischen dem Behälter 16, z.B. einem Wandabschnitt desselben, und dem Behältnis 1, 2 mit dem darin geschützt angeordneten Transponder zu erzeugen.

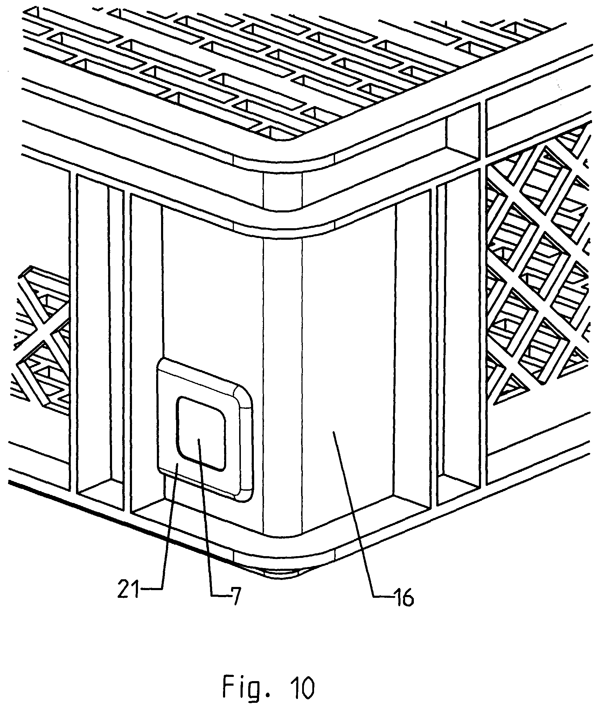

Beim Entformen des spritzgegossenen Behälters 16 wird die Platzierungsnase 3 abgetrennt. Da das Dickenmass des Behältnisses 1, 2 gleich der Wandstärke des Behälters 16 beim betreffenden Bereich ist, fluchtet der betreffende Bereich mit den Erhebungen 7, 9. Die Wand des Behälters 16 weist aus Festigkeitsgründen beim Bereich des eingegossenen Behältnisses 1, 2 eine Verdickung 21 auf, so wie in der Figur 10 gezeigt ist, in welcher Figur 10 ein Eckbereich des Behälters 16 mit eingegossenem Transponder dargestellt ist. Zu bemerken ist, dass zur noch besseren Erkennung des Ortes des Transponders im Behälter 16 die Behältnisteile 1, 2 eine vom Behälter 16 verschiedene Farbe aufweisen können.

## Patentansprüche

1. Gusstechnisch verarbeitbares, aus Kunststoff bestehendes Behältnis (1, 2) zur geschützten Aufnahme eines Transponders (11, 12, 13, 14), der einen ebenflächigen Träger (13) mit einem umhüllten Chip (11) und eine entlang dem Randbereich des Trägers (13) verlaufende Rahmenantenne (14) aufweist, gekennzeichnet durch einen ersten Behältnisteil (1) mit einer davon abstehenden Platzierungsnase (3) und erste Schnappverschlussabschnitte (6), durch einen zweiten Behältnisteil (2) mit zweiten, mit den ersten zusammenwirkenden Schnappverschlussabschnitten (8), wobei eines (1) der Behältnisteile (1, 2) eine Vertiefung (4) zur Aufnahme des anderen Behältnisteils (2) und eines zwischen diesen Behältnisteilen (1, 2) angeordneten Transponders (11, 12, 13, 14) aufweist, und der andere Behältnisteil (2) eine Anzahl Führungsvertiefungen (10) zur führenden Aufnahme der Umhüllung (12) des Transponderchips (11) aufweist.

2. Behältnis nach Anspruch 1, dadurch gekennzeichnet, dass die Vertiefung (4) im ersten Behältnisteil (1) und die Führungsvertiefungen (10) im zweiten Behältnisteil (2) ausgebildet sind.

3. Behältnis nach Anspruch 1 oder 2, dadurch gekennzeichnet, dass der zweite Behältnisteil (2) plattenförmig mit einer viereckigen Grundrissform ausgebildet ist und vier Führungsvertiefungen (10) im Winkelabstand von jeweils 90° aufweist.

4. Behältnis nach einem der vorangehenden Ansprüche, dadurch gekennzeichnet, dass die Schnappverschlussabschnitte (6) des ersten Behältnisteils (1) durch Innenrillen an den die Vertiefung (4) umgebenden Seitenwänden (5) desselben und die Schnappverschlussabschnitte (8) des zweiten Behältnisteils (2) durch Aussenwülste an seinen Seitenrändern gebildet sind.

5. Behältnis nach einem der vorangehenden Ansprüche, dadurch gekennzeichnet, dass beide Behältnisteile (1, 2) an ihren Aussenflächen jeweils eine Erhebung (7, 9) aufweisen.

6. Behälter (16) zur Aufnahme von Waren einschliesslich einem einen Transponder (11, 12, 13, 14) enthaltenden Behältnis (1, 2) nach einem der vorangehenden Ansprüche, dadurch gekennzeichnet, dass der Behälter (16) mit dem Behältnis (1, 2) einstückig stoffschlüssig spritzgegossen ausgebildet ist.

7. Behälter nach Anspruch 6, dadurch gekennzeichnet, dass das im Behälter (16) eingegossene Behältnis (1, 2) bei beiden seiner Hauptflächen eine über die Behälteraussenwände hervorstehende Erhebung (7, 9) zur Markierung des Ortes des eingegossenen Transponders (11, 12, 13, 14) aufweist.

8. Behälter nach Anspruch 6 oder 7, dadurch gekennzeichnet, dass das Behältnis (1, 2) eine vom Behälter (16) verschiedene Farbe zur Markierung des Ortes des eingegossenen Transponders (11, 12, 13, 14) aufweist.

9. Verfahren zur Herstellung eines Behälters (16) nach einem der Ansprüche 6 bis 8 durch ein Spritzgiessen eines Kunststoffes in einer Kunststofform, dadurch gekennzeichnet, dass die Kunststofform mindestens beim Bereich des im Behälter (16) anzuordnenden Behältnisses (1, 2) derart ausgebildet wird, dass das Mass der Wandstärke des herzustellenden Behälters (16) beim genannten Bereich gleich dem Dickenmass des plattenförmigen Behältnisses (1, 2) ist, dass die Platzierungsnase (3) des den Transponder (11, 12, 13, 14) enthaltenden Behältnisses (1, 2) zum genauen Platzieren desselben in der Gussform durch eine beim besagten Bereich angeordnete Durchbrechung (17) in der Spritzgussform hindurchgesteckt und der Behälter (16) spritzgegossen wird, womit eine stoffschlüssige Verbindung zwischen dem Behälter (16) und dem Behältnis (1, 2) entsteht, und dass beim Entformen des Behälters (16) die hervorstehende Platzierungsnase (3) abgetrennt wird.
